# FASCICULE DE BREVET EUROPEEN

(11) **EP 0 683 385 B1**
(45) Date de publication et mention de la délivrance du brevet: **05.03.1997**
(21) Numéro de dépôt: 95400840.5
(22) Date de dépôt: 13.04.1995
(51) Int. Cl.: G01L 5/13

(54) **Procédé et dispositif pour l'estimation de la poussée d'un statoréacteur**
Verfahren und Vorrichtung zur Beurteilung der Schubkraft eines Staustrahltriebwerks
Procedure and device for estimating the thrust of a ramjet

(30) Priorité: 18.05.1994 FR 9406058
(43) Date de publication de la demande: 22.11.1995
(73) Titulaire: AEROSPATIALE Société Nationale Industrielle, 75781 Paris Cédex 16 (FR)
(72) Inventeur: Chevalier, Alain, F-18000 Bourges (FR); Protat, Vincent, F-18000 Bourges (FR)
(74) Mandataire: Bonnetat, Christian

(56) Documents cités:
- DE-A- 3 631 923
- THE ENGINEER, vol. 205,no. 5344, 27 Juin 1958 LONDON (GB), pages 964-967, P. ROWE 'LABORATORY METHODS OF MEASURING THRUST'

## Description

La présente invention concerne un procédé pour estimer la poussée d'un statoréacteur, un procédé pour optimiser la chambre de combustion d'un statoréacteur, ainsi qu'un dispositif pour la mise en oeuvre de ces procédés.

Pour la mesure de la poussée de réacteurs ou de moteurs, en particulier pour aéronefs, on monte de façon usuelle le moteur à essayer sur un banc d'essai particulièrement complexe. Puis, on fait fonctionner ledit moteur et on détermine sa poussée à partir de la mesure de l'effort longitudinal engendré par ledit moteur en fonctionnement. Une telle mesure nécessite des moyens, comme par exemple des capteurs de déplacement, extrêmement précis et par conséquent complexes. La complexité des moyens utilisés sur le banc d'essai est due, en particulier, à la nécessité de déterminer de nombreux termes correctifs utilisés pour calculer la poussée effective du moteur et souvent difficiles à mesurer, comme par exemple la traînée externe ou la traînée de culot.

La présente invention appliquée exclusivement à un statoréacteur a pour objet de remédier auxdits inconvénients existant lors de la détermination de la poussée, dans le cas où la poussée d'un statoréacteur à déterminer ne doit pas être mesurée de façon exacte, mais seulement estimée. L'invention concerne un procédé permettant d'estimer de façon simple et à coût réduit la poussée d'un statoréacteur.

A cette fin, selon l'invention, le procédé pour estimer la poussée d'un statoréacteur est remarquable en ce que :
a) on monte la chambre de combustion du statoréacteur sur des moyens agencés à poste fixe et conférant à ladite chambre de combustion une liberté partielle de mouvement longitudinal ;
b) on agence, à l'entrée de ladite chambre de combustion, des moyens de soufflage comportant une tuyère montée à poste fixe ;
c) on agence entre ladite tuyère et l'entrée de ladite chambre de combustion au moins une vessie souple remplie d'un fluide et reliée à un moyen pour mesurer la pression dudit fluide contenu dans ladite vessie ;
d) on souffle de l'air, à travers ladite tuyère, dans la chambre de combustion de manière à créer dans ladite chambre de combustion des conditions d'alimentation identiques à celles existant lors d'un fonctionnement déterminé du statoréacteur ;
e) on alimente en combustible ladite chambre de combustion de manière à pouvoir engendrer une combustion ; et
f) on mesure la pression du fluide contenu dans ladite vessie, qui résulte du déplacement de ladite chambre de combustion par rapport à ladite tuyère lors de la combustion.

Ainsi, comme le déplacement de ladite chambre de combustion, mobile longitudinalement par rapport à ladite tuyère à poste fixe, est dû à la poussée exercée sur ladite chambre de combustion lors de la combustion, la pression mesurée dans ladite vessie est représentative de la poussée du statoréacteur et fournit donc une bonne estimation de cette poussée.

En outre, l'estimation de la poussée est effectuée à l'aide de moyens simples et à bon marché, ce qui entraîne une réduction du coût.

De plus, pour tenir compte du fait que la poussée du statoréacteur peut s'inverser et devenir négative, il est avantageux que la pression de repos initiale du fluide dans la vessie soit fixée à un niveau positif. Ainsi, on peut mesurer les variations de pression positives et négatives par rapport à ce niveau et donc la poussée, qu'elle soit positive ou négative.

Ledit procédé conforme à l'invention pour l'estimation de la poussée d'un statoréacteur peut être mis en oeuvre dans des applications nombreuses et variées. Il peut par exemple être utilisé pour effectuer la comparaison des performances en propulsion de différents statoréacteurs, ou encore pour optimiser la chambre de combustion d'un statoréacteur.

A cet effet, la présente invention concerne en outre un procédé permettant de déterminer, parmi différents agencements internes de la chambre de combustion d'un statoréacteur, l'agencement optimal pour lequel le statoréacteur présente la poussée maximale, pour des conditions de fonctionnement identiques.

Selon l'invention, ledit procédé est remarquable en ce que :
- pour chacun desdits différents agencements internes de la chambre de combustion, on effectue les étapes a) à f) du procédé précité pour l'estimation de la poussée du statoréacteur, en recréant dans chacune des étapes d) et e) les mêmes conditions d'alimentation dans ladite chambre de combustion ;
- on compare entre elles les pressions mesurées du fluide contenu dans la vessie ; et
- on détermine comme agencement optimal l'agencement de la chambre de combustion pour lequel la pression du fluide de la vessie est la plus élevée.

Ledit procédé permet donc d'optimiser la chambre de combustion d'un statoréacteur, puisqu'il permet de déterminer l'agencement interne de la chambre de combustion pour lequel la poussée du statoréacteur estimée par la valeur de la pression du fluide de la vessie est la plus élevée.

Par ailleurs, la présente invention concerne également un dispositif pour la mise en oeuvre de l'un quelconque des procédés précités.

De façon avantageuse, ledit dispositif comporte :
- des moyens agencés à poste fixe, sur lesquels est montée la chambre de combustion d'un statoréacteur à essayer de manière à présenter une liberté partielle de mouvement longitudinal ;
- des moyens de soufflage d'air comportant une tuyère montée à poste fixe, agencés à l'entrée de ladite chambre de combustion munie d'au moins un dispositif d'injection de combustibles ;
- au moins une vessie souple remplie d'un fluide et agencée entre ladite tuyère et l'entrée de ladite chambre de combustion ; et
- un moyen relié à ladite vessie pour mesurer la pression du fluide contenu dans ladite vessie.

Ladite vessie peut évidemment être réalisée de différentes manières, par exemple sous forme de poches souples à volume réduit réparties angulairement entre ladite tuyère et ladite face d'entrée de la chambre de combustion.

Toutefois, de préférence, ladite vessie est réalisée sous forme d'un tube fermé, formant un tore dont l'axe est coaxial à ladite tuyère et à ladite chambre de combustion.

Pour des raisons de facilité du montage, avantageusement, ledit dispositif comporte une première bride de raccord solidaire de ladite tuyère et une seconde bride de raccord solidaire de la face d'entrée de ladite chambre de combustion, ladite vessie souple étant montée entre lesdites première et seconde brides de raccord.

Pour pouvoir mesurer les poussées positives et négatives du statoréacteur, on prévoit une pièce intermédiaire entre lesdites première et seconde brides de raccord et deux vessies souples, l'une entre ladite première bride et ladite pièce intermédiaire, l'autre entre cette dernière pièce et ladite seconde bride.

En outre, de façon avantageuse, au moins ladite première bride de raccord comporte une gorge dans laquelle est logée ladite vessie, et ladite pièce intermédiaire agencée entre lesdites première et seconde brides de raccord présente une partie saillante, qui pénètre dans ladite gorge et dont la face externe est en contact de ladite vessie souple.

Par ailleurs, dans la zone de liaison entre ladite tuyère et ladite chambre de combustion, les diamètres internes de ladite tuyère, desdites première et seconde brides de raccord et de ladite chambre de combustion, sont sensiblement identiques, ce qui permet d'obtenir au niveau de ladite zone de liaison, un écoulement régulier de l'air soufflé à travers ladite tuyère dans ladite chambre de combustion.

Avantageusement, lesdites première et seconde brides de raccord sont reliées ensemble par l'intermédiaire de vis de serrage munies d'un système élastique tendant à rapprocher lesdites première et seconde brides l'une de l'autre.

Ainsi, par le serrage desdites vis, on peut créer une pression initiale déterminée dans ladite vessie, avant l'alimentation en air de ladite chambre de combustion.

Les figures du dessin annexé feront bien comprendre comment l'invention peut être réalisée. Sur ces figures, des références identiques désignent des éléments semblables.

La figure 1 est une vue schématique, en coupe, d'un dispositif conforme à l'invention.

La figure 2 est une vue agrandie, en coupe, de la zone de liaison entre la chambre de combustion et la tuyère, représentée schématiquement sur la figure 1.

La figure 3 est une coupe partielle schématique selon la ligne III-III de la figure 2, illustrant schématiquement la liaison entre le tube souple et le moyen pour mesurer la pression.

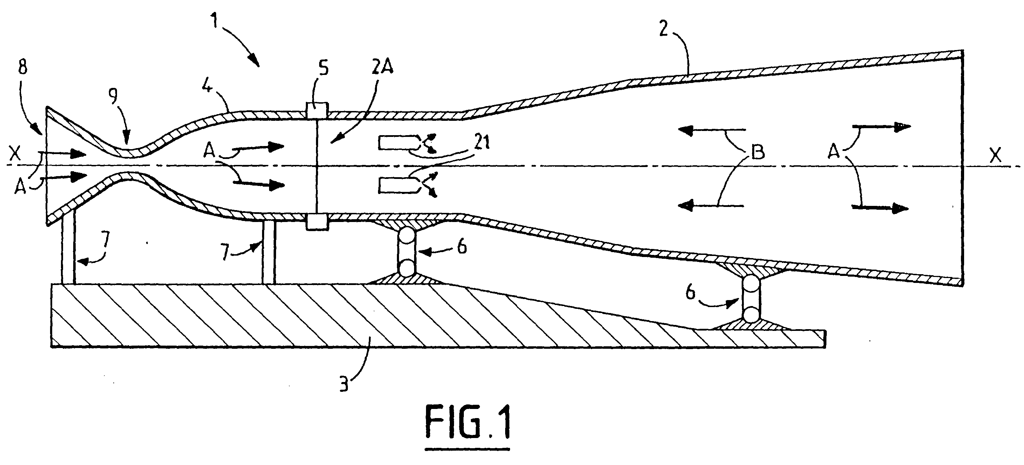

Le dispositif 1 conforme à l'invention et représenté sur la figure 1 est utilisé pour estimer la poussée d'un statoréacteur. Ladite estimation est effectuée conformément à l'invention en montant uniquement la chambre de combustion 2 dudit statoréacteur à essayer sur ledit dispositif 1.

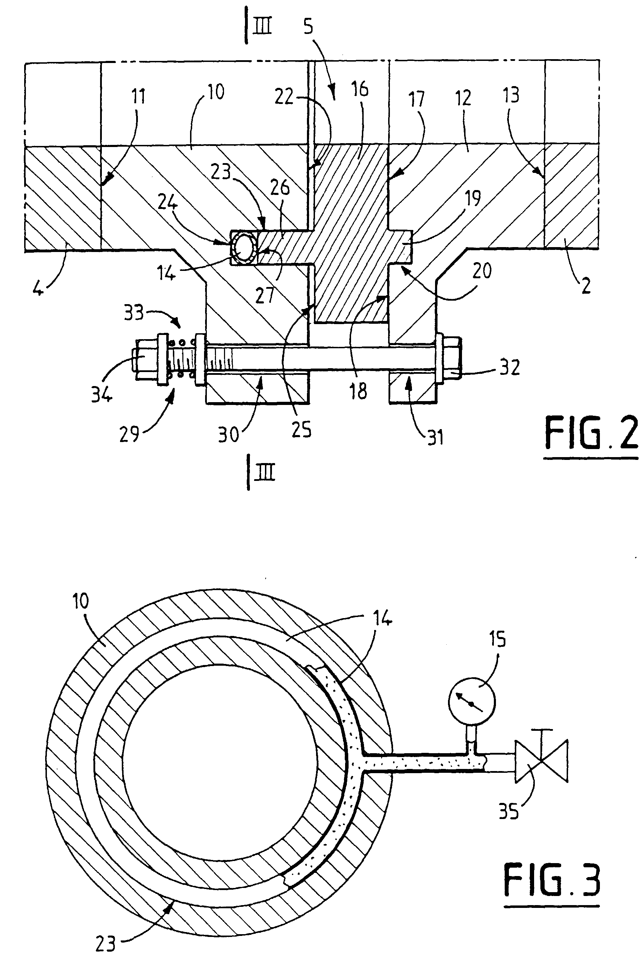

Selon l'invention, ledit dispositif 1 comporte :
- un support fixe 3, sur lequel est montée ladite chambre de combustion 2 ;
- des moyens de soufflage d'air comportant une tuyère 4 fixée sur ledit support 3, à l'entrée 2A de ladite chambre de combustion 2 ; et
- des éléments agencés entre ladite tuyère 4 et ladite chambre de combustion 2, lesdits éléments indiqués schématiquement sous la référence 5 sur la figure 1 étant représentés en détail selon une vue agrandie sur la figure 2 et décrits ci-après.

La chambre de combustion 2, d'axe X-X, est montée sur ledit support fixe 3 par l'intermédiaire de moyens d'articulation 6, de type connu, de manière que ladite chambre de combustion 2 soit immobile en direction transversale, mais présente une liberté partielle de mouvement longitudinal, approximativement le long dudit axe X-X.

La tuyère 4 à symétrie de révolution est montée, quant à elle, par l'intermédiaire de pieds 7 sur ledit support 3 de manière coaxiale à l'axe X-X. Ladite tuyère 4 peut également présenter une section rectangulaire ou carrée.

Lesdits moyens de soufflage comportent, en plus de ladite tuyère 4, un système d'alimentation en air non représenté, agencé près de la face d'entrée 8 de ladite tuyère 4, permettant de souffler de l'air dans cette dernière, comme on le verra plus en détail ci-après. Par ailleurs, ladite tuyère présente dans sa partie médiane 9 une diminution importante de diamètre de manière à permettre une circulation d'air à travers ladite tuyère 4 en veine forcée.

Pour faciliter le montage de la chambre de combustion 2 par rapport à la tuyère 4, le dispositif 1 comporte une première bride de raccord 10 fixée sur la face arrière 11 de ladite tuyère 4 et une seconde bride de raccord 12 fixée sur la face avant 13 de la chambre de combustion 2.

Par ailleurs, le dispositif 1 conforme à l'invention comporte :
- une vessie réalisée sous forme d'un tube souple 14, par exemple en caoutchouc ou en tout autre matériau présentant des caractéristiques de dilatation appropriées, et remplie d'un fluide ; et
- un moyen 15 représenté sur la figure 3 permettant de mesurer la pression dudit fluide contenu dans ledit tube souple 14.

Comme on peut le voir sur la figure 2, une pièce intermédiaire 16 est agencée de façon coopérante entre lesdites première et seconde brides de raccord 10 et 12.

La face arrière 17 de ladite pièce intermédiaire 16 est agencée en contact de la face avant 18 de la seconde bride de raccord 12. Pour obtenir une bonne liaison entre lesdits éléments, la pièce intermédiaire 16 est munie sur ladite face arrière 17 d'une partie saillante 19 qui pénètre en position assemblée, en présentant un contact périphérique, dans un évidement 20 formé en correspondance dans la face avant 18 de ladite seconde bride de raccord 12.

La première bride de raccord 10 est munie, quant à elle, sur sa face arrière 22, en regard de la pièce intermédiaire 16, d'une gorge 23 dans laquelle est logé ledit tube souple 14 disposé au contact du fond 24 de ladite gorge 23. Ladite gorge 23 présente une forme circulaire transversalement à ladite première bride de raccord 10, comme on peut le voir sur la figure 3.

La pièce intermédiaire 16 comporte sur sa face avant 25 une partie saillante 26 formée en correspondance de ladite gorge 23.

En position assemblée des différentes pièces, comme représenté sur la figure 2, la face externe 27 de ladite partie saillante 26 vient au contact du tube souple 14 logé dans ladite gorge 23. Toutefois, dans cette position, la face arrière 22 de la première bride de raccord 10 et la face avant 25 de la pièce intermédiaire 16 ne sont pas en contact. Ainsi, il est possible de rapprocher ces pièces l'une de l'autre, un tel rapprochement entraînant évidemment la compression du tube souple 14 prisonnier entre ledit fond 24 de la gorge 23 et ladite face externe 27 de la partie saillante 26.

Lesdites première et seconde brides de raccord 10 et 12 sont maintenues ensemble par l'intermédiaire de vis de serrage identiques 29 réparties radialement autour desdites pièces, extérieurement à la tuyère 4 et à la chambre de combustion 2. Chacune desdites vis de serrage 29 traverse des trous 30 et 31 pratiqués en regard dans lesdites brides de raccord 10 et 12 et est maintenue par sa tête 32 montée du côté de la seconde bride de raccord 12. Chacune desdites vis de serrage 29 est munie en outre du côté opposé à la tête 32 d'un système élastique 33, comportant par exemple un ressort, bloqué entre un écrou 34 monté sur la vis 29 et la première bride de raccord 10.

En serrant lesdites vis de serrage 29, on rapproche la seconde bride de raccord 12, et donc la pièce intermédiaire 16 en contact avec celle-ci, de la première bride de raccord 10, ce qui comprime le tube souple 14 et augmente la pression du fluide qu'il contient, pression que l'on peut mesurer par le moyen de mesure 15. Ledit tube souple 14 est muni d'une vanne 35 permettant de le remplir d'un fluide approprié, comme par exemple de l'eau, tel que représenté sur la figure 3.

En outre, des dispositifs d'injection de combustible 21 sont agencés dans ladite chambre de combustion 2 vers l'entrée 2A de cette dernière, tel que représenté sur la figure 1, lesdits dispositifs d'injection de combustible 21 étant destinés à alimenter en combustible ladite chambre de combustion 2.

Conformément à l'invention, pour estimer la poussée d'un statoréacteur, on effectue les opérations suivantes :
- on monte la chambre 2 du statoréacteur sur le dispositif 1 conforme à l'invention, de la manière décrite ci-dessus, ledit tube souple 14 étant préalablement rempli d'un fluide ;
- on serre les vis de serrage 29 pour obtenir une pression déterminée dans ledit tube souple 14, cette pression servant de pression de référence ; et
- on souffle de l'air à travers ladite tuyère 4 dans ladite chambre de combustion 2, comme illustré par des flèches A sur la figure 1 et on alimente en combustible la chambre de manière à créer dans ladite chambre de combustion des conditions d'alimentation en air et en combustible identiques à celles existant lors d'un fonctionnement déterminé du statoréacteur et à pouvoir engendrer une combustion.

Lors de la combustion, une poussée illustrée par des flèches B est exercée sur la chambre de combustion 2, provoquant le déplacement de ladite chambre de combustion 2 dans le sens indiqué par lesdites flèches B. Ce déplacement est transmis par l'intermédiaire de la seconde bride de raccord 12 solidaire de la chambre de combustion 2 à la pièce intermédiaire 16 qui comprime le tube souple 14 par l'intermédiaire de la partie saillante 26, puisque la première bride de raccord 10 portant ledit tube souple 14 et solidaire de ladite tuyère 4 est fixe.

Cette compression entraîne alors une augmentation de la pression du fluide contenu dans ledit tube souple 14, mesurée par le moyen de mesure 15.

Lorsque, à partir de l'alimentation en air et en combustible, les conditions de fonctionnement souhaitées sont obtenues dans ladite chambre de combustion 2, on mesure la pression à l'intérieur du tube souple 14. Cette pression est alors représentative de la poussée du statoréacteur et fournit donc une estimation de ladite poussée.

Ladite estimation de la poussée peut évidemment être effectuée pour des points de fonctionnement variables, correspondant par exemple au fonctionnement, dans un domaine de vol déterminé, d'un aéronef mû par un tel statoréacteur.

Bien entendu, le mode de réalisation du dispositif conforme à l'invention représenté sur les figures n'est fourni qu'à titre d'exemple. D'autres formes de réalisation sont évidemment possibles, en particulier en ce qui concerne la vessie qui, au lieu d'être réalisée sous forme d'un tube souple, peut être réalisée par exemple sous forme de poches souples réparties angulairement autour de la zone de liaison entre la tuyère et la chambre de combustion. La seule exigence est que ladite vessie puisse être comprimée en dépendance du mouvement longitudinal de la chambre de combustion et que la pression du fluide qu'elle contient soit donc représentative de la poussée du statoréacteur.

Le dispositif 1 conforme à l'invention peut présenter de nombreuses applications. Par exemple, il peut être utilisé pour comparer la poussée de différents statoréacteurs, en montant successivement les chambres de combustion de ces statoréacteurs sur ledit dispositif 1 et en mesurant la pression à l'intérieur du tube souple lors d'une alimentation en air desdites chambres de combustion.

Il convient simplement de veiller, au cours des mesures successives :
- à garder la même quantité de fluide dans le tube souple 14
- à effectuer un serrage préalable des vis de serrage 29 de manière à obtenir à chaque fois la même pression initiale à l'intérieur dudit tube souple 14 ; et
- à recréer pour chaque mesure les mêmes conditions de fonctionnement par un contrôle de l'alimentation en air et en combustible.

De préférence, cependant, le dispositif 1 conforme à l'invention est utilisé pour optimiser la chambre de combustion d'un statoréacteur.

A cet effet, on effectue des modifications de l'agencement interne de la chambre de combustion dans le but d'obtenir le meilleur agencement possible, à savoir celui pour lequel la poussée du statoréacteur est la plus élevée.

A cet effet, selon l'invention, pour chacun des différents agencements internes de la chambre de combustion, on mesure la pression du fluide contenu dans le tube souple 14 pour des conditions de fonctionnement déterminées, la chambre de combustion étant bien entendu montée sur le dispositif conforme à l'invention de la manière décrite précédemment.

Comme lesdites pressions mesurées sont représentatives des poussées obtenues à partir des agencements internes respectifs de la chambre de combustion, l'agencement pour lequel la pression mesurée est la plus élevée est donc déterminé comme le meilleur possible.

Quoique ci-dessus on ait décrit l'invention à l'aide d'un exemple dans lequel il est évident que la poussée du statoréacteur a une valeur positive, il est bien évident que le dispositif conforme à la présente invention permet également d'estimer une poussée négative, à la condition que la pression initiale de repos du fluide dans ladite vessie soit fixée à un niveau positif.

On remarquera que ce point est important, puisque dans de tels statoréacteurs, il peut arriver que pour certains points de fonctionnement, la poussée s'inverse (devient négative) sur certaines plages spécifiques de fonctionnement desdits statoréacteurs.

En variante, au même effet, il est possible de prévoir une vessie supplémentaire (non représentée) entre la pièce intermédiaire et la seconde bride de raccord 12 de la chambre de combustion 2. Cette vessie supplémentaire peut être agencée de façon identique à ce qui est décrit et représenté pour la vessie 14.

## Revendications

1. Procédé pour estimer la poussée d'un statoréacteur, caractérisé en ce que :
a) on monte la chambre de combustion (2) du statoréacteur sur des moyens (3, 6) agencés à poste fixe et conférant à ladite chambre de combustion (2) une liberté partielle de mouvement longitudinal ;
b) on agence, à l'entrée (2A) de ladite chambre de combustion (2), des moyens de soufflage comportant une tuyère (4) montée à poste fixe ;
c) on agence entre ladite tuyère (4) et l'entrée (2A) de ladite chambre de combustion (2) au moins une vessie souple (14) remplie d'un fluide et reliée à un moyen (15) pour mesurer la pression dudit fluide contenu dans ladite vessie (14) ;
d) on souffle de l'air, à travers ladite tuyère (4), dans la chambre de combustion (2) de manière à créer dans ladite chambre de combustion (2) des conditions d'alimentation identiques à celles existant lors d'un fonctionnement déterminé du statoréacteur ;
e) on alimente en combustible ladite chambre de combustion (2) de manière à pouvoir engendrer une combustion ; et
f) on mesure la pression du fluide contenu dans ladite vessie (14), qui résulte du déplacement de ladite chambre de combustion (2) par rapport à ladite tuyère (4) lors de la combustion.

2. Procédé selon la revendication 1,
caractérisé en ce que la pression de repos initiale du fluide dans la vessie est fixée à un niveau positif.

3. Procédé pour déterminer, parmi différents agencements internes de la chambre de combustion (2) d'un statoréacteur, l'agencement optimal pour lequel le statoréacteur présente la poussée maximale,
caractérisé en ce que :
- pour chacun desdits différents agencements internes de la chambre de combustion (2), on effectue les étapes a) à f) du procédé selon la revendication 1, en recréant dans chacune des étapes d) et e) les mêmes conditions d'alimentation dans ladite chambre de combustion (2) ;
- on compare entre elles les pressions mesurées du fluide contenu dans la vessie (14) ; et
- on détermine comme agencement optimal l'agencement de la chambre de combustion (2) pour lequel la pression du fluide de la vessie est la plus élevée.

4. Dispositif pour la mise en oeuvre de l'un quelconque des procédés spécifiés sous les revendications 1 à 3,
caractérisé en ce qu'il comporte :
- des moyens (3, 6) agencés à poste fixe, sur lesquels est montée la chambre de combustion (2) d'un statoréacteur à essayer de manière à présenter une liberté partielle de mouvement longitudinal ;
- des moyens de soufflage d'air comportant une tuyère (4) montée à poste fixe, agencés à l'entrée (2A) de ladite chambre de combustion (2) munie d'au moins un dispositif d'injection de combustible (21) ;
- au moins une vessie souple (14) remplie d'un fluide et agencée entre ladite tuyère (4) et l'entrée (2A) de ladite chambre de combustion (2) ; et
- un moyen (15) relié à ladite vessie (14) pour mesurer la pression du fluide contenu dans ladite vessie (14).

5. Dispositif selon la revendication 4,
caractérisé en ce que ladite vessie est réalisée sous forme d'un tube fermé (14).

6. Dispositif selon l'une des revendications 4 ou 5,
caractérisé en ce qu'il comporte une première bride de raccord (10) solidaire de ladite tuyère (4) et une seconde bride de raccord (12) solidaire de la face d'entrée (2A) de ladite chambre de combustion (2), au moins une vessie souple (14) étant montée entre lesdites première et seconde brides de raccord (10, 12).

7. Dispositif selon la revendication 6,
caractérisé en ce qu'une pièce intermédiaire (16) est agencée entre lesdites première et seconde brides de raccord (10, 12) et en ce que deux vessies souples (14) sont prévues, l'une entre ladite première bride (10) et ladite pièce intermédiaire (16), l'autre entre cette dernière pièce et ladite seconde bride (12).

8. Dispositif selon la revendication 6,
caractérisé en ce qu'au moins ladite première bride de raccord (10) comporte une gorge (23) dans laquelle est logée ladite vessie (14), et en ce qu'une pièce intermédiaire (16) agencée entre lesdites première et seconde brides de raccord (10, 12) présente une partie saillante (26), qui pénètre dans ladite gorge et dont la face externe (27) est en contact de ladite vessie souple (14).

9. Dispositif selon l'une des revendications 6 ou 8,
caractérisé en ce que, dans la zone de liaison entre ladite tuyère (4) et ladite chambre de combustion (2), les diamètres internes de ladite tuyère (4), desdites première et seconde brides de raccord (10, 12) et de ladite chambre de combustion (2), sont sensiblement identiques.

10. Dispositif selon l'une des revendications 6 à 9,
caractérisé en ce que lesdites première et seconde brides de raccord (10, 12) sont reliées ensemble par l'intermédiaire de vis de serrage (29) munies d'un système élastique (33) tendant à rapprocher lesdites première et seconde brides l'une de l'autre.

## Patentansprüche

1. Verfahren zur Beurteilung der Schubkraft eines Staustrahltriebwerks, dadurch gekennzeichnet, daß:
a) die Brennkammer (2) des Staustrahltriebwerks an stationär angebrachten Mitteln (3, 6) montiert wird, die der Brennkammer (2) eine teilweise Bewegungsfreiheit in Längsrichtung verleihen;
b) am Eintritt (2A) der Brennkammer (2) Gebläsemittel mit einer stationär angebrachten Düse (4) angeordnet werden;
c) zwischen der Düse (4) und dem Eintritt (2A) der Brennkammer (2) mindestens eine mit einem Fluid gefüllte flexible Blase (14) angeordnet wird, die mit einem Mittel (15) zur Messung des Drucks des Fluids in der Blase (14) verbunden ist;
d) durch die Düse (4) in die Brennkammer (2) Luft geblasen wird, so daß in der Brennkammer (2) Versorgungsbedingungen geschaffen werden, wie sie bei einem bestimmten Betrieb des Staustrahltriebwerks gegeben sind;
e) die Brennkammer (2) mit Kraftstoff versorgt wird, so daß eine Verbrennung stattfinden kann, und
f) der Druck des Fluids in der Blase (14) gemessen wird, der sich aus der Bewegung der Brennkammer (2) gegenüber der Düse (4) bei der Verbrennung ergibt.

2. Verfahren nach Anspruch 1,
dadurch gekennzeichnet, daß der Anfangsruhedruck des Fluids in der Blase auf ein positives Niveau festgelegt wird.

3. Verfahren, um unter verschiedenen Innenanordnungen der Brennkammer (2) eines Staustrahltriebwerks die optimale Anordnung zu bestimmen, bei der das Staustrahltriebwerk die maximale Schubkraft aufweist,
dadurch gekennzeichnet, daß
- für jede der verschiedenen Innenanordnungen der Brennkammer (2) die Stufen a) bis f) des Verfahrens nach Anspruch 1 ausgeführt und in jeder der Stufen d) und e) erneut die gleichen Versorgungsbedingungen in der Brennkammer (2) geschaffen werden;
- die Meßdrücke des Fluids in der Blase (14) miteinander verglichen werden und
- als optimale Anordnung die Anordnung der Brennkammer (2) bestimmt wird, bei der der Druck des Fluids der Blase am höchsten ist.

4. Vorrichtung zur Anwendung eines der in den Ansprüchen 1 bis 3 dargelegten Verfahren,
dadurch gekennzeichnet, daß sie umfaßt:
- stationär angebrachte Mittel (3, 6), an denen die Brennkammer (2) eines zu prüfenden Staustrahltriebwerks so montiert wird, daß diese eine teilweise Bewegungsfreiheit in Längsrichtung aufweist;
- Mittel zum Einblasen von Luft mit einer stationär angebrachten Düse (4), die am Eintritt (2A) der Brennkammer (2) angeordnet sind, die mit mindestens einer Kraftstoffeinspritzvorrichtung (21) ausgestattet ist;
- mindestens eine flexible Blase (14), die mit einem Fluid gefüllt und zwischen der Düse (4) und dem Eintritt (2A) der Brennkammer (2) angeordnet ist, und
- ein Mittel (15), das mit der Blase (14) verbunden ist, um den Druck des Fluids in der Blase (14) zu messen.

5. Vorrichtung nach Anspruch 4,
dadurch gekennzeichnet, daß die Blase in Form eines geschlossenen Schlauchs (14) ausgeführt ist.

6. Vorrichtung nach einem der Ansprüche 4 oder 5,
dadurch gekennzeichnet, daß sie einen ersten Verbindungsflansch (10), der mit der Düse (4) verbunden ist, und einen zweiten Verbindungsflansch (12), der mit der Eintrittsseite (2A) der Brennkammer (2) verbunden ist, hat, wobei zwischen dem ersten und zweiten Verbindungsflansch (10, 12) mindestens eine flexible Blase (14) angeordnet ist.

7. Vorrichtung nach Anspruch 6,
dadurch gekennzeichnet, daß ein Zwischenteil (16) zwischen dem ersten und zweiten Verbindungsflansch (10, 12) angeordnet ist, und dadurch, daß zwei flexible Blasen (14) vorgesehen sind, eine zwischen dem ersten Flansch (10) und dem Zwischenteil (16) und die andere zwischen diesem Zwischenteil und dem zweiten Flansch (12).

8. Vorrichtung nach Anspruch 6,
dadurch gekennzeichnet, daß mindestens der erste Verbindungsflansch (10) eine Kehle (23) hat, in der die Blase (14) gelagert ist, und dadurch, daß ein Zwischenteil (16) zwischen dem ersten und zweiten Verbindungsflansch (10, 12) ein überstehendes Teil (26) hat, das in die Kehle eingreift und dessen Außenseite (27) mit der flexiblen Blase (14) in Verbindung steht.

9. Vorrichtung nach einem der Ansprüche 6 oder 8,
dadurch gekennzeichnet, daß die Innendurchmesser der Düse (4), des ersten und zweiten Verbindungsflanschs (10, 12) und der Brennkammer (2) in der Verbindungszone zwischen der Düse (4) und der Brennkammer (2) etwa identisch sind.

10. Vorrichtung nach einem der Ansprüche 6 bis 9,
dadurch gekennzeichnet, daß der erste und zweite Verbindungsflansch (10, 12) durch Spannschrauben (29) mit einem elastischen System (33), durch das der erste und zweite Flansch aneinander angestellt werden können, miteinander verbunden sind.

## Claims

1. Method for estimating the thrust of a ramjet, characterized in that:
a) the combustion chamber (2) of the ramjet is mounted on means (3, 6) which are arranged fixed and provide the said combustion chamber (2) with partial freedom of longitudinal movement;
b) blowing means comprising a nozzle (4) which is mounted fixed are arranged at the intake (2A) of the said combustion chamber (2);
c) between the said nozzle (4) and the intake (2A) of the said combustion chamber (2), at least one flexible bladder (14) is arranged which is filled with a fluid and connected to a means (15) for measuring the pressure of the said fluid contained in the said bladder (14);
d) air is blown through the said nozzle (4) into the combustion chamber (2), so as to create in the said combustion chamber (2) feed conditions which are identical to those existing during a defined operation of the ramjet;
e) fuel is fed to the said combustion chamber (2) so as to make it possible to generate combustion; and
f) the pressure of the fluid contained in the said bladder (14), which results from the displacement of the said combustion chamber (2) with respect to the said nozzle (4) during the combustion is measured.

2. Method according to Claim 1, characterized in that the initial static pressure of the fluid in the bladder is fixed at a positive level.

3. Method for determining, from among various internal arrangements of the combustion chamber (2) of a ramjet, the optimum arrangement for which the ramjet presents maximum thrust, characterized in that:
- for each of the said different internal arrangements of the combustion chamber (2), steps a) to f) of the method according to Claim 1 are carried out, while recreating in each of steps d) and e) the same feed conditions in the said combustion chamber (2);
- the measured pressures of the fluid contained in the bladder (14) are compared with each other; and
- the arrangement of the combustion chamber (2) for which the pressure of the fluid in the bladder is the highest is determined to be the optimum arrangement.

4. Device for implementing any one of the methods specified under Claims 1 to 3, characterized in that it comprises:
- means (3, 6) which are arranged fixed and on which the combustion chamber (2) of a ramjet to be tested is mounted so as to present partial freedom of longitudinal movement;
- air blowing means comprising a nozzle (4) mounted fixed, which are arranged at the intake (2A) of the said combustion chamber (2) which is provided with at least one fuel injection device (21);
- at least one flexible bladder (14) filled with a fluid and arranged between the said nozzle (4) and the intake (2A) of the said combustion chamber (2); and
- a means (15), connected to the said bladder (14), for measuring the pressure of the fluid contained in the said bladder (14).

5. Device according to Claim 4, characterized in that the said bladder is produced in the form of a closed tube (14).

6. Device according to one of Claims 4 and 5, characterized in that it comprises a first connection flange (10) solidly attached to the said nozzle (4) and a second connection flange (12) solidly attached to the intake face (2A) of the said combustion chamber (2), at least one flexible bladder (14) being mounted between the said first and second connection flanges (10, 12).

7. Device according to Claim 6, characterized in that an intermediate part (16) is arranged between the said first and second connection flanges (10, 12) and in that two flexible bladders (14) are provided, one between the said first flange (10) and the said intermediate part (16), and the other between the latter part and the said second flange (12).

8. Device according to Claim 6, characterized in that at least the said first connection flange (10) comprises a groove (23) in which the said bladder (14) is housed, and in that an intermediate part (16) arranged between the said first and second connection flanges (10, 12) has a projecting part (26) which penetrates into the said groove and of which the external face (27) is in contact with the said flexible bladder (14).

9. Device according to one of Claims 6 and 8, characterized in that, in the junction zone between the said nozzle (4) and the said combustion chamber (2), the internal diameters of the said nozzle (4), of the said first and second connection flanges (10, 12) and of the said combustion chamber (2) are substantially identical.

10. Device according to one of Claims 6 to 9, characterized in that the said first and second connection flanges (10, 12) are connected together by means of clamping screws (29) provided with an elastic system (33) tending to bring first and second flanges towards one another.
